Europäisches Patentamt

European Patent Office

Office européen des brevets

(11) Publication number: **0 119 834**
A1

# EUROPEAN PATENT APPLICATION

(21) Application number: 84301748.4

(22) Date of filing: 14.03.84

(51) Int. Cl.³: **B 65 B 27/02**, B 65 G 47/08

(30) Priority: 15.03.83 GB 8307078

(43) Date of publication of application: 26.09.84
Bulletin 84/39

(84) Designated Contracting States: DE FR IT SE

(71) Applicant: ANCHOR BUILDING PRODUCTS LIMITED,
Broomhills Road, Leighton Buzzard Bedfordshire (GB)

(72) Inventor: Hammond, Leslie Gerald, 15, Windsor Avenue,
Leighton Buzzard Bedfordshire (GB)
Inventor: Chamberlain, Keith, 12 Hawthorn Avenue,
Bletchley Milton Keynes Buckinghamshire (GB)

(74) Representative: Keitie, David Arthur et al, Baron &
Warren 18 South End Kensington, London W8 5BU (GB)

(54) Tile packaging.

(57) Apparatus for and a method of packaging tiles, in which tiles (2) are continuously formed into a first stack (3) of which the tiles (2) are arranged one behind the other on one edge thereof along a moving path (1), and in which a second stack (3c) of tiles consisting of a lesser number of tiles than that of, the first stack (3), is separated from the first stack (3) by moving the second stack (3c) in the direction (4) of the path (1) at a speed which is greater than that of said path, and by forming the second stack (3c) of tiles into a tile package.

## TILE PACKAGING

This invention relates to a method and apparatus for use in the packaging of tiles, more particularly but not exclusively, extruded concrete roofing tiles, by securing a strap or band around a stack of tiles or wrapping the stack in a plastics material.

In extrusion processes for manufacturing concrete roofing tiles, the tiles are continuously extruded on pallets and are fed on a conveyor system incorporating belt conveyors from the tile extrusion machine to a depalleting device, usually via a curing zone in which the tiles are partially cured. After depalleting, the tiles are removed from the conveyor and stacked in the open air for curing or to complete the curing process as the case may be.

In order to avoid manual handling of large numbers of uncured or partially cured individual tiles, involving at least one operative with the attendant possibility of the tiles being damaged during removal from the conveyor line, stacking in the open air and transport to site, various systems have been devised for arranging the tiles in successive stacks comprising, for example 40 to 50 tiles in which the tiles are arranged one behind the other on one edge thereof. One such system for forming successive tile stacks is disclosed in our co-pending United Kingdom patent application No. 8309459. The tile stacks are then placed in positions in which they can be formed

0119834

into tile packages either by strapping, banding, or wrapping in a plastics material.

The entire packaging operation including stacking should be carried out at a speed which is compatible with that of the extrusion machine. However, packaging apparatus known to the applicants is often expensive as it is of complicated design involving many mechanical parts and with complex electrical control systems, which in the event of any malfunction can result in prolonged and expensive down-time to find the fault. With more simple, less expensive apparatus known to the Applicants, there can be difficulties in obtaining the requisite operational speeds.

In a packaging operation, it is important, that the step of positioning the already formed tile stack at a packaging location does not slow down, or interrupt, the flow of tiles to and from the stacking location and thus slow down the tile extrusion process.

Accordingly, it is an object of this invention to provide a method and apparatus for use in the packaging of tiles which is relatively inexpensive, less complicated and more flexible than the aforesaid known methods and apparatus.

To this end and from one aspect, the present invention consists in a method of packaging tiles, in which tiles are continuously formed into a first stack of which the tiles are arranged one behind the other on one edge thereof along a moving path, characterised by separating a second stack of tiles from, and consisting of a lesser number of tiles than that of, the first stack, by moving the second stack in the direction of said path at a speed which is greater than that of said path.

From another aspect, the present invention consists in apparatus for use in the packaging of tiles, said apparatus being characterised by conveyor means on which the tiles can be continuously formed into a first stack in which the tiles are arranged one behind the other on one edge thereof, means for supporting a second stack of tiles contained in, but consisting of a lesser number of tiles than that of, the first stack, and means for driving the supporting means in the direction of movement of the conveyor means at a speed which is greater than that of the conveyor means thereby to separate the second stack of tiles from the tiles of the first stack.

In this specification the expression "conveyor means" includes within its ambit any means capable of moving articles from one location to another.

"Tiles" is used herein in a generic sense to include any other slab-like elements whether made of concrete, clay, wood, plastics or other materials, e.g. paving slabs.

By separating a second stack of tiles from the tiles of the already formed first stack, so that some of the tiles of the first stack always remain behind. The stacking operation can continue without interruption, thereby enabling the packaging operation to be carried out at speeds which

-4-

are compatible with those of modern tile extrusion machines.

In a preferred embodiment, the supporting means is a grab hereinafter referred to generically as a grab into whose open jaws a laterally projecting edge of the first stack is fed by the movement of the conveyor means. When a specified number of tiles e.g. 60 have been stacked the grab jaws are closed and hold a second stack of say 50 tiles by its laterally projecting edge.

In order to avoid damage to the tiles, when the jaws are closed, the grab is caused to move at the same speed, for example by connecting the grab to the conveyor means. Thereafter, the connection to the conveyor means is released if appropriate and the movement of the grab in the direction of the stack and conveyor path is accelerated to a speed greater than that of the conveyor means to separate the second stack of tiles held by the grab from the remainder of the tiles in the first stack which still rest on the conveyor means. To prevent wear of the conveyor means and to ensure freedom of accelerated movement of the grab, just prior to or at the instant the grab jaws are closed or when the connection to the conveyor means is released, the jaws are lifted just clear of the conveyor means.

This accelerated movement of the grab in the direction of the stack may be continued to bring the grab clear of the conveyor means and a packaging location where e.g. a strap or band is wrapped and secured around that portion of the stack which projects sideways out of the jaws of the grab in the central longitudinal region of the stack.

Alternatively, the accelerated movement of the grab is discontinued after separation has been achieved and the grab is turned upwardly through 180° and then moved horizontally to the packaging location where a strap or band is wrapped and secured around the central longitudinal region of the stack.

In order that the invention may be more readily understood, reference will now be made to the accompanying drawings, in which:-

Figures 1 to 3 are diagrammatic perspective views from the front of part of an apparatus for use in packaging extruded concrete roofing tiles and showing three successive operational stages,

Figure 4 is a diagrammatic side elevation of apparatus for use in packaging extruded concrete roofing tiles, and incorporating the part of the apparatus shown in Figures 1 to 3 and showing another operational stage,

Figure 5 is a diagrammatic plan view of a part of the apparatus of Figure 4,

Figures 6A to 6C are diagrammatic side views showing three stages in an alternative method of banding or strapping, and

Figures 7 and 8 are diagrammatic front and rear perspective views of apparatus for carrying out the method of Figures 6A to 6C.

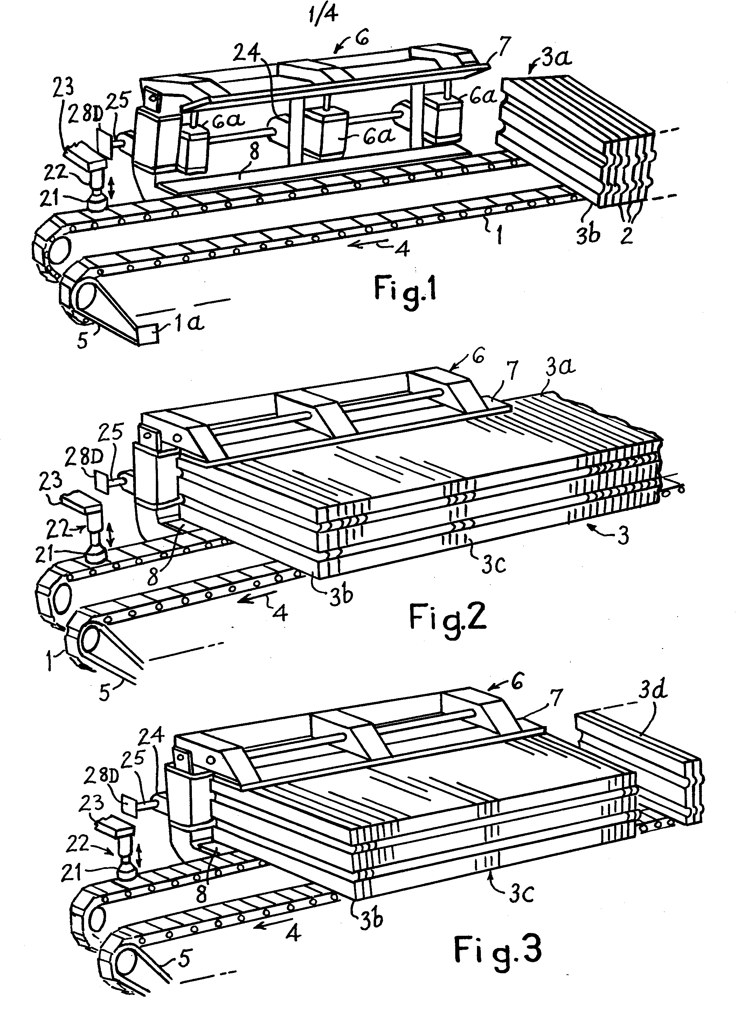

Referring to Figures 1 to 5 of the drawings, there is shown a conveyor 1 forming a path on which extruded concrete contoured roofing tiles 2 are stacked one behind the other on one side edge thereof to form a stack 3 of say 60 such tiles (see Fig. 2). The side edges 3a and 3b of the stack project laterally beyond the sides of the conveyor 1. The conveyor 1 is driven stepwise in the direction of the arrow 4 by an electric motor 1a via a belt 5, the electric motor being started and stopped by electrical switching means actuated by the movement of the tiles onto the conveyor 1 and incorporated in, for example, the apparatus disclosed in our aforementioned U.K. Patent Application No. 8309459 (Publication No.

A supporting means constituted by a grab 6 for separating a stack of tiles from the stack 3 in a manner to be described is arranged at one side of the path taken by the conveyor 1 and comprises upper and lower jaws 7 and 8 respectively. The grab jaws 7 and 8 are closed and opened by means of double-acting pressure-fluid operated piston and cylinder devices 6a. In the open position of the jaws 7,8 shown in Figure 1 the upper surface of the lower jaw 8 is located in a position which is slightly below the upper surface of the conveyor 1 and the lower surface of the upper jaw 7 is located in a higher position than the upper surface of the stack so that the laterally projecting edge 3a of the forming stack of tiles is fed by the conveyor between the jaws of the grab without contacting the jaws.

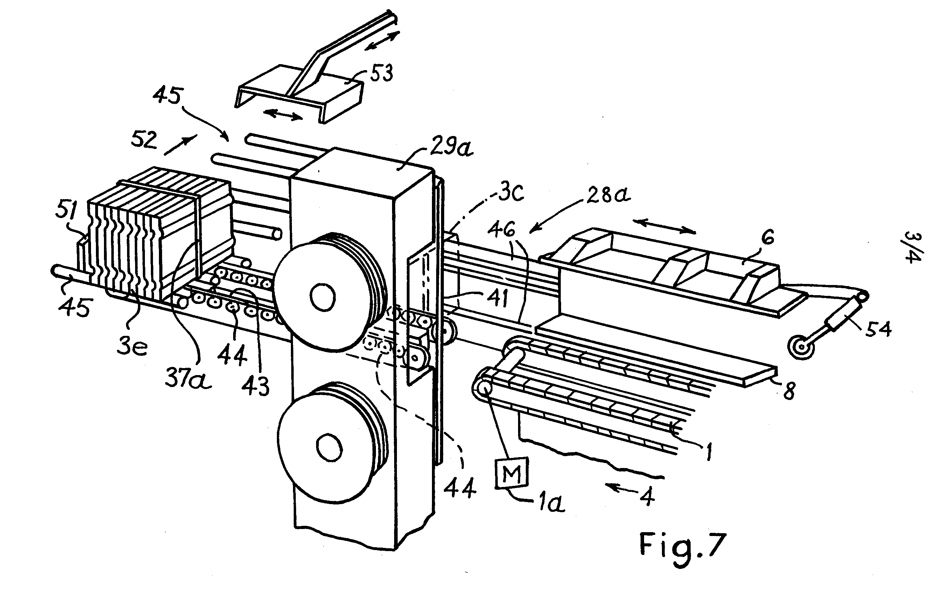

Referring more particularly to Figure 5, the grab 6 is supported on a carriage 9 having an outer chassis 10 in the form of a rectangular frame. The chassis 10 is mounted on support beams 11, which extend at right angles to the conveyor 1, by means of wheels 12 which engage in U-shaped, in cross-section, channels in the beams. The carriage 9 also comprises a frame 13 on which the grab 6 is mounted and the frame 13 is in turn mounted on the chassis 10 by means of wheels 14 which engage in U-shaped, in cross-section channels, in the side frame elements of the chassis 10 which extend parallel to the conveyor 1. Thus, the frame 13 can be driven on the wheels 14 in directions parallel to the conveyor 1 as indicated by the double-headed arrow 15 by means of pressure fluid operated piston and cylinder devices 16 and 17 respectively. And, the chassis 10 can be driven on the wheels 12 in directions at right angles to the conveyor 1 as indicated by the double-headed arrow 18 by means of pressure-fluid operated piston and cylinder devices 19 and 20 respectively.

As shown in Figures 1 to 3, a pressure pad 21 for a purpose to be described is fixed to the piston of a pressure fluid operated piston and cylinder device 22 mounted on a bracket 23 fixed to the frame 13 (see Fig. 5) so as to move therewith.

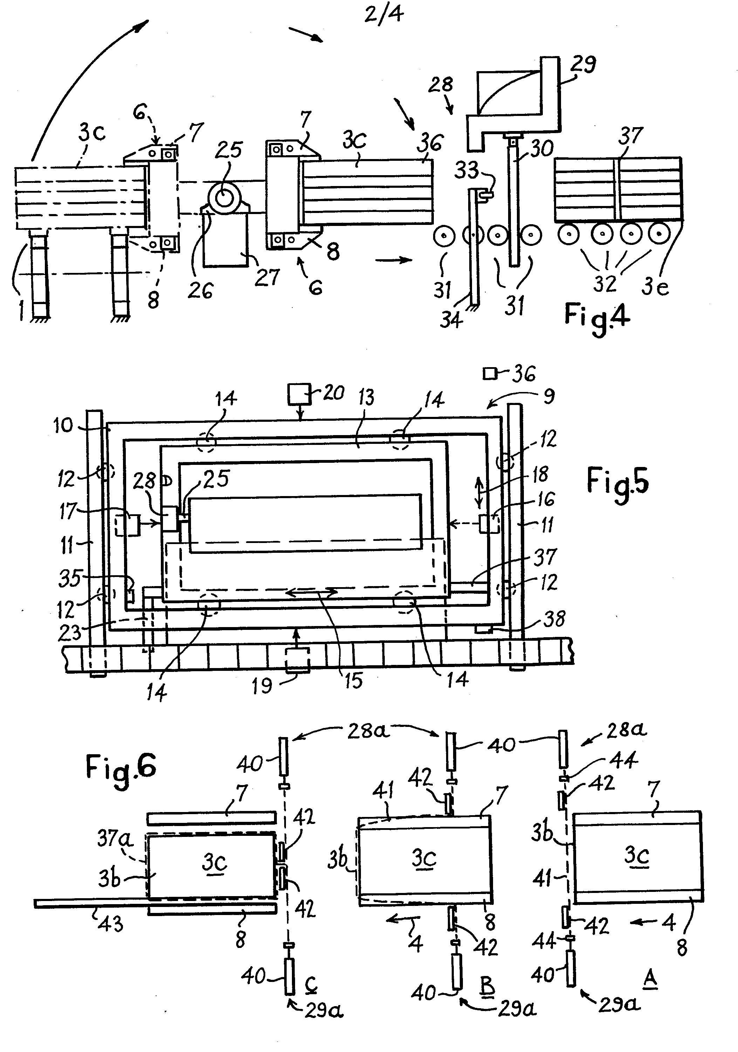

Referring more particularly to Figure 4 the grab 6 is fixed by clamp arms to a shaft 25 which is rotatably mounted in bearing elements such as 26, supported on pillars such as 27 fixed to frame 13. The shaft is rotated by drive means, diagrammatically illustrated at 28D(Figs. 1 to 3 and 5) mounted on the frame 13 to turn the grab 6 upwards and over through 180° between the chain line position adjacent the conveyor 1 and the full line position adjacent a packaging station 28. The drive means conveniently comprises an electric motor and reversing gear box and a reduction gear box. At the packaging station 28 a banding machine, diagrammatically illustrated at 29 is arranged and comprises a rectangular banding frame 30 which projects downwardly between adjacent rollers 31 of one set of rollers which are driven by a suitable electric motor (not shown). Downstream of the banding frame 30 there is another set of driven rollers 32. The banding machine has a supply of band of which a length extends around a U-shaped in cross-section inwardly opening channel in the banding frame 30. Since the banding machine is well known, it will not be more fully described.

Guide wheels 33 (only one shown) mounted on supports 34 are disposed at opposite ends respectively of the set of rollers 31 to be engaged by the tiles at the opposite ends of a stack of tiles resting thereon as will be more fully explained.

The apparatus described with reference to Figures 1 to 5 operates in the following manner.

The tiles 2 are successively stacked on the conveyor 1 which is indexed along step by step by the conveyor drive motor 1a as each tile is positioned on the conveyor as will be appreciated from Figure 1. As a stack is progressively formed on the conveyor 1 its inner projecting edge 3a is fed between the jaws 7 and 8 of the grab 6. When a predetermined number of tiles has been stacked on the conveyor , say 60 as counted up by a counter (not shown) for example which number coincides with the jaws 7, 8 taking the maximum possible number of tiles, the grab jaws are closed by the devices 6a. Just prior to, or at the instant that the grab jaws are fully closed, thus securely clamping the laterally projecting edge 3a of the stack 3 of tiles therebetween, the device 23 is operated to push the pressure pad 21 into contact with the adjacent conveyor track. Pressure contact of

-10-

the pad 21 with the conveyor 1 causes the frame 13 to move on the chassis 10 so that the grab holding the tile stack 3c is moved with and at the same speed as the conveyor (see Figure 2). During this time tiles 2 continue to be stacked on the conveyor 1.

Then, at an instant in time between the movement steps of the conveyor 1, the pressure pad 21 is retracted from contact with the conveyor by the device 22. As the pad 21 is retracted, the grab jaws 7 and 8 are lifted by operating momentarily the drive means 28D which turn the shaft 25, or by operating a separate pressure fluid operated piston and cylinder device (not shown) to lift the tile stack 3c out of contact with the conveyor 1 and in to a position in which the stack 3c is just clear of the the conveyor 1. Alternatively, the grab jaws can be lifted to clear the tile stack 3c from contact with the conveyor 1 just after the grab jaws have closed on the tile stack 3c.

16 is operated to accelerate the movement of the frame 13 in the direction of arrow 4 to a speed greater than that of the conveyor, thereby separating the stack 3c of say 50 tiles from the remaining tiles 3d of the stack 3 formed on the conveyor 1, as will be apparent from Figure 3. An hydraulic buffer stop 35 (Fig. 5) positioned on the chassis 10 delimits the accelerated separating movement of the grab frame 13 and the device 16 continues to operate, pressing the frame 13 firmly against the buffer stop.

When the grab frame 13 is pushed against the buffer stop 35 the grab drive means 28 are operated to turn the grab from the chain line position to the full-line position shown in Figure 4. When the grab reaches the full-line position, the device 19 is operated and the chassis 10 is moved horizontally on the supports 11 towards the packaging station 28 until the projecting edge 3b of the stack 3c contacts the rollers 31 and projects through the opening in the banding frame 30, during which movement the end tiles of the stack 3c engage guide wheels 33. This horizontal movement is delimited by means of an hydraulic buffer stop 36 which engages with chassis 10. The devices 6a are operated causing the grab jaws to open, and rollers 31 to be driven which move the stack 3c through the banding frame. When the longitudinal central region of the stack 3c is aligned with the banding frame a switch is actuated by the movement of the tile stack and the length of band in the banding frame is wrapped and secured around the stack and the banded stack 3e having the band 37 secured therearound is moved out of the frame by the driven rollers 31 and onto the driven rollers 32 which convey the stack to a location where it can be removed together with say three other such banded stacks by means of a fork-lift truck, for example.

Since the end tiles of the stack 3c engage the guide wheels 33 before, and until the stack 3c is banded the integrity of the stack is maintained after the grab jaws have opened and during its passage through the banding frame.

When the rollers 31 have driven the stack 3c a sufficient distance to clear the grab jaws, the grab is first turned through 180$^{o}$, after which supply of pressurized fluid to the device 16 is stopped and the device 17 is operated to move the frame 13 in the opposite direction to that of the conveyor 1 and in parallel therewith so as to bring the grab to a position opposite its original position shown in Figure 1 which position is defined by another hydraulic buffer stop 37. Supply of pressurized fluid to the device 17 is continued to maintain the frame 13 and thus the grab in a fixed position relative to the chassis 10. Pressure-fluid supply to device 19 is then stopped and the device 20 operated to bring the open grab jaws into the position shown in Figure 1. By this time about 60% of another stack 33 will have already been formed since the tile stacking operation continues uninterrupted throughout. By leaving the movement of the chassis 10 to the initial position of the grab jaws to the last, the open jaws are positioned about the projecting edge 3a of the forming tile stack 3 without any damage to the tiles. When another stack of say 60 tiles is formed the sequence of operations as heretofore described takes place.

It should be appreciated that simultaneously with the operation of the device 16 to effect the accelerated movement of the frame 13, the supply of pressurized fluid to the device 17 is discontinued.

The entire operation is controlled by a control circuit connected to a control panel (not shown) and the operation of the various pressure-fluid operated devices, and electric motors are controlled by appropriate switching means which have not been shown for reasons of clarity and which, in any event, are well known, per se.

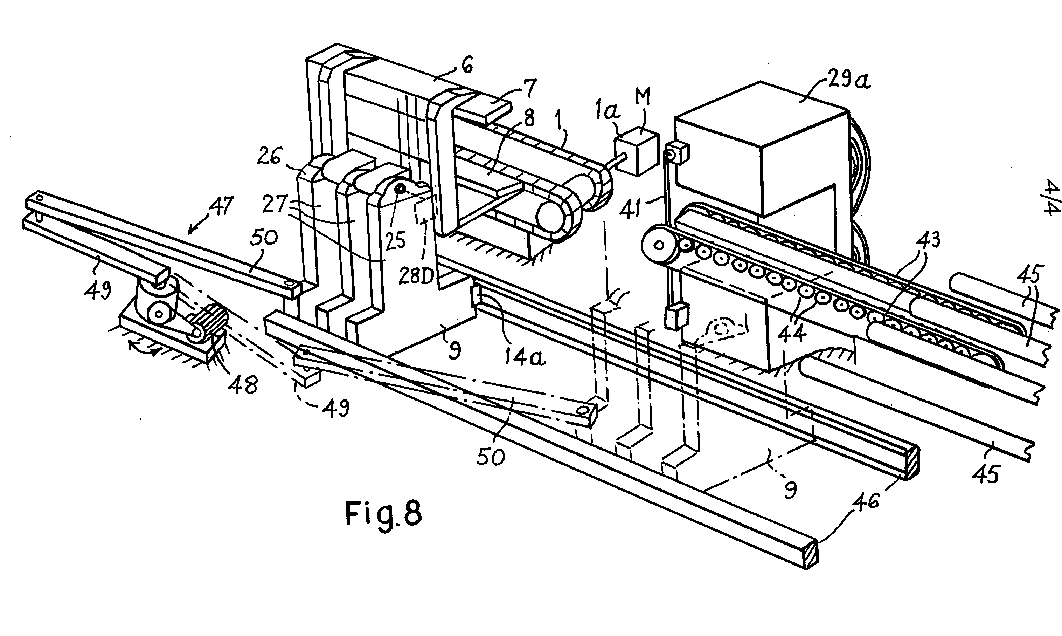

In the alternative method of banding shown in Figs. 6A to 6C 7 and 8, the accelerated movement of the grab 6 in the direction 4 is continued to bring the stack 3c to and through a packaging station 28a comprising a banding machine 29a. The grab 6 corresponds to that of Figs. 1 to 3, and is fixed to the rotatable shaft 25 driven by the electric motor 28D. Instead of being mounted on the frame 13 mounted on the chassis 10 supported on the beams 11, the carriage 9 with its wheels 14a runs along guide rails 46 extending parallel to the direction of movement of the conveyor 1 and a band conveyor 43 to be described. The pressure pad 21, piston 1, cylinder device 22 and bracket 23 which would be fixed to the carriage 9 have been omitted for reasons of clarity from Figs. 8 and 9. The machine 29a comprises two band or strap dispensers 40 between which a continuous band or strap 41 extends vertically, two tension grippers 44 and two sealing heads 42. The band conveyor 43 extends for the entire width of, and beyond the left-hand side, as illustrated of the banding machine and is supported on two parallel rows of freely rotatable wheels 44. The band conveyor 43 which is driven by an electric motor (not shown) runs between driven rollers 45 of another conveyor extending at right angles to the direction of movement of conveyor 43. The conveyor 43 is a lifting conveyor which is provided with a double acting pressure fluid operated piston and cylinder device (not shown) which acts on the downstream end (the right-hand end as illustrated in Fig. 8) to pivot the conveyor 43 about its upstream end so that the downstream end region of the conveyor 43 is lifted above or lowered beneath the upper surfaces of the rollers 45 as the case may be. In this embodiment, the grab 6 is driven on its carriage 9 along the rails 46 by means of a cranked lever or double arm linkage 47 driven by an electric motor 48. The short arm 49 of the linkage is fixed to one end of a driven shaft and is pivoted to one end of the long arm 50 whose other end is pivoted to the grab carriage. When the motor 48 is operated, the linkage is extended to move the grab 6 along the rails 46 from the full line position to the chain line position shown in Fig. 8.

The tile stacks are successively formed between the grab jaws as previously described with reference to Figs. 1 to 2. When the stack 3 is formed of the chosen number of tiles the grab jaws 7, 8 are closed and simultaneously therewith the connection of the grab to the conveyor 1 is made, e.g. by means of the pressure pad 21 (not shown), so that the grab holding the tile stack 3c is moved with and at the same speed as the conveyor 1.

When the pad 21 or other connection to conveyor 1 is released, the linkage motor 48 is operated, and at the same time the motor 28D is operated to lift the grab jaws 7, 8, and thereby lift the tile stack 3c just clear of the conveyor 1 and a pressure fluid operated piston and cylinder device 54 carried by the grab 6 is operated to engage its piston with the end tile 2 of the stack (the right-hand end is shown in Fig. 3) to ensure that integrity of the stack 3c is maintained and the stack is not twisted during accelerated movement of the grab 6. The grab 6 carrying the tile stack 3c is driven along the rails and into the chain line position in which it is in the packaging station 28a. Since the grab jaws 7 and 8 hold the projecting edge 3a of the stack 3c to one side only of the longitudinal central line of the stack

-16-

the remainder of the stack projects out of the grab jaws and thus the jaws do not impede the banding operation.

The movement of the grab in the direction of the arrow 4 causes the band 41 to wrap around the stack 3c in its central longitudinal region as can be seen in Figure 6B. At the stage of Figure 6C, the sealing heads 42 have moved around the right hand end of the stack. The movement of the sealing head tensions the band 41 so as to ensure that the tiles of the stack 3c are firmly in contact with one another, the seals are made and the band cut between the seals so that another continuous vertical length of band 41 is ready, as shown in Figs. 6A and 8 for another banding operation. Just prior to the seals being made the grab jaws 7, 8 are opened so that the stack 3c is dropped a very short distance onto the band conveyor 43. After sealing and severing of the band, the conveyor 43 which is in its lifted position is operated to move the stack 3e having a band 37a secured therearound out of the banding station and above the rollers 45. The piston of the device 54 is retracted and the linkage motor 48 is driven in the reverse direction to return the grab 6 to the full line position shown in Fig. 8 to repeat the process which has just been described. When the banded stack 3e is positioned completely over the rollers 45 as defined by an end stop 51, abutment of the leading end of the stack 3e with a microswitch (not shown) stops and lowers the conveyor 43, so that the bonded stack 3e engages with the rollers 45, and actuates a drive motor (not shown) for the rollers 45 which move the banded stack in the direction indicated by the arrow 52 out of the conveyor path, the direction of movement of which is indicated by the arrow 4. As the banded stack is being moved to a loading position on rollers 45 an overhead grab 53 (Fig. 7) is moved above the loading position with its jaws in an open position. When the banded stack 3e reaches the loading position, the grab 53 is lowered, its jaws closing around the stack, which is then raised by the grab and moved to a marshalling location where the banded stack can be picked up and removed together with other banded stacks for example by a fork-lift truck.

It should be appreciated that various modifications may be made without departing from the scope of the invention as defined in the appended claims. For example, in the alternative method of packaging shown in Figures 6A to 6C the grab 6 could be replaced by another form of supporting means such as two projecting fingers mounted on a frame. The fingers may be moved under the stack 3 so that they project in the direction of movement 4, raised to contact the undersurface of the stack, moved at the same speed as that of the conveyor 1, and then accelerated to separate the stack 3c and moved to the banding station 28a. A pressure-fluid operated finger-like element may be mounted on the finger frame to be pushed upwards between the tiles of stack 3c and the

-18-

remaining tiles on conveyor 1 to facilitage separation and act as an end support for the stack 3c.

In the embodiment of Figs. 4 and 5, two piston and cylinder devices like the piston and cylinder device 54 may be disposed at opposite ends respectively of the grab 6 for engaging with the opposite end tiles respectively of the stack 3c immediately after separation from the stack 3.

Moreover, instead of the grab jaws being lifted to lift the tile stack clear of the conveyor 1, the conveyor 1 may be arranged to slope downwards in the direction of movement of the conveyor 1 indicated by the arrow 4 with the grab jaws remaining horizontal so that when the grab jaws are closed on the tiles that part of the stack is lifted leaving as few as just the end tile 2 in contact with the conveyor 1 so that when the grab 6 is accelerated to separate the stack 3c from stack 3, all the tiles of the stack 3c clear the conveyor 1.

-19-

CLAIMS

1. Apparatus for use in the packaging of tiles, which comprises a conveyor means on which tiles can be continuously formed into a first stack in which the tiles are arranged one behind the other on one edge thereof, and which is characterized by means (6) for supporting a second stack (3c) of tiles contained in, but consisting of a lesser number of tiles than that of, the first stack (3), and by means (16 or 47, 48) for driving the supporting means (6) in the direction of movement of the conveyor means (1) at a speed which is greater than that of the conveyor means (1) thereby to separate the second stack (3c) of tiles from the tiles of the first stack (3).

2. Apparatus as claimed in claim 1, characterized in that means (21, 22) are provided for causing the supporting means (6) to move at the same speed as that of the conveyor means (1).

3. Apparatus as claimed in claim 2, characterized in that the means (21, 22) for causing the supporting means (6) to move at the speed of the conveyor means (1) is a connecting device (21) which is operative to connect the supporting means (6) to the conveyor means (1).

4. Apparatus as claimed in claim 3, characterized in that the connecting device (21) is a pressure pad (21) which is movable into contact with the upper run of the conveyor means (1).

5. Apparatus as claimed in claim 3 or 4, characterized in that means are provided for disconnecting the connecting device (21) from the conveyor means (1) before or at the operation of the drive means (16 or 47, 48) for moving the supporting means (6) at a speed greater than that of the conveyor means (1).

6. Apparatus as claimed in any one of claims 1 to 5, characterized in that provision is made for disengaging the supported stack (3c) from contact with the conveyor means (1).

7. Apparatus as claimed in claim 6, characterized in that means (28D) are provided for lifting the second tile stack (3c) out of engagement with the conveyor means (1) prior to or at the instant of, operation of the drive means (16 or 47, 48) for driving the supporting means (6) at a speed greater than that of the conveyor means (1) or, the conveyor means (1) slopes downwardly in the direction of movement of the conveyor means (1) so that the second tile stack (3c) disengages the conveyor means (1) after the said drive means (16 or 47, 48) is operated.

8. Apparatus as claimed in any one of claims 1 to 7, characterized in that the supporting means (6) carry one or two extensible and retractable means (54) for engaging one end tile (2), or opposite end tiles (2) respectively, of the second tile stack (3c) after separation from the first tile stack (3).

9. Apparatus as claimed in any one of claims 1 to 8, characterized in that the supporting means (6) is a grab (6) into whose open jaws (7, 8) a laterally projecting edge (3a) of the first stack (3) is fed by the movement of the conveyor means (1) and in that means (6a) are provided for closing the grab jaws 7, 8 to hold the second tile stack (3c) therebetween and for opening the grab jaws (7,8) to release the second tile stack (3c).

10. Apparatus as claimed in any one of claims 1 to 8, characterized in that the supporting means comprises projecting means which is movable under the first tile stack (3) so that it projects in the direction of movement of the conveyor means (1) and is liftable to contact the undersurface of the first tile stack (3).

11. Apparatus as claimed in claim 9 or 10, characterized in that a packaging station (28a) is located in alignment with the conveyor means (1) such that the accelerated movement of the supporting means (6) brings the second tile stack (3c) clear of the conveyor means (1) and into the packaging station (28a), where the second tile stack (3c) is formed into a tile package (3e) by packaging means (29a).

12. Apparatus as claimed in claim 11, characterized in that the packaging means is a banding machine (29a) comprising two band or strap dispensers (40) between which a continuous band or strap (41) extends vertically in the path of movement of the second tile stack (3c) through the packaging station (28a) such that movement of the second tile stack (3c) through the packaging station (28a) causes the band or strap (41) to wrap around the second tile stack (3c) and in that the banding machine (29a) comprises means (42) for securing the band or strap (41) around the

-22-

second tile stack (3c) to form the tile package (3e) and for severing the band or strap such as to leave a continuous band or strap (41) ready for the next tile packaging operation.

13. Apparatus as claimed in claim 11 or 12, characterized in that the packing station (28a) comprises a lifting conveyor (43) for supporting the second tile stack (3c) after it has been relased from the supporting means (6) and for moving the tile package (3e) out of the packaging station (28a) said lifting conveyor (43) being pivotable downwardly and upwardly about its upstream end, in that a driven conveyor (45) extends transversely of the downstream end region of the lifting conveyor (43), whereby when the downstream end of the lifting conveyor (43) is in a raised position, the tile package (3e) can be moved by the lifting conveyor (43) into a position above the driven conveyor (45) and when the downstream end of the lifting conveyor (43) is in a lowered position, the tile package (3e) engages the driven conveyor (45).

14. Apparatus as claimed in any one of claims 1 to 12, characterized in that the supporting means (6) is mounted on guide means (46) extending parallel to the direction of the conveyor means (1) and in that the supporting means (6) is driven along the guide means (46).

15. Apparatus as claimed in claim 9, characterized in that a packaging station (28) is disposed at right angles to the conveyor means (1) and characterized by means (28D) for turning the grab (6) upwardly and over through 180° and by means (19) for moving the grab horizontally to the packaging station (28) where the second tile stack (3c) is formed into a tile package (3e) by packaging means (29, 30), and which comprises a driven roller conveyor (31) which moves the second tile stack (3c) through the packaging station after the grab jaws (7, 8) have opened.

16. Apparatus as claimed in claim 15, characterized in that the packaging means is a banding machine (29) comprising a banding frame (31) which projects through a gap between two rollers of the roller conveyor (31) such that the second tile stack (3c) can pass through the opening in the bonding frame (31) which has a length of band or strap extending therearound, and in that switching means are actuated by the movement of the second tile stack (3c) through the banding frame (31) to cause the length of band to be wrapped and secured around the second tile stack (3c) to form the tile package (3e).

17. Apparatus claimed in claim 15 or 16, characterized in that guide means (33) are provided for engaging the opposite end tiles (2) of the second tile stack (3c) in the packaging station (28).

18. A method of packaging tiles, in which tiles are continuously formed into a first stack of which the tiles are arranged one behind the other on one edge thereof along a moving path, characterized by separating a second stack (3c) of tiles from, and consisting of a lesser number of tiles than that of, the

-24-

first stack (3), by moving the second stack (3c) in the direction (4) of the path (1) at a speed which is greater than that of said path, and by forming the second stack (3c) of tiles into a tile package (3e).

Fig.1

Fig.2

Fig.3

0119834

2/4

Fig.4

Fig.5

Fig.6

Fig.7

Fig.8

4/4

0119834

0119834

European Patent Office

**EUROPEAN SEARCH REPORT**

EP  84 30 1748

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 292 624  (COS. MEC S.R.L.)<br><br>* Page 4, lines 4-25; page 6, claim 1; figures 1,2,7-9 * | 1,6,7, 10-12, 18 | B 65 B    27/02<br>B 65 G    47/08 |
| A | * Page 3, lines 6-15; figures 4-6 * | 13 | |
| X | DE-A-1 924 516  (C. KELLER & CO.)<br>* Columns 5,6; claim 1; figure 1 * | 1,2 | |
| A | DE-A-1 909 156  (C. KELLER & CO.)<br>* Page 5, paragraph 2; figure 1 * | 7,9 | TECHNICAL FIELDS SEARCHED (Int. Cl. ³) |
| A | DE-U-1 893 046 (CYKLOP-GESELLSCHAFT, EMIL HOFFMAN)<br>* Page 8, lines 19-25; figures 2-4 * | 16,17 | B 65 B<br>B 65 G |
| P,A | DE-A-3 228 347  (GRIMME H.)<br><br>* Pages 1,2; claims 1,2 * | 9,11, 12,14 | |

The present search report has been drawn up for all claims

| Place of search | Date of completion of the search | Examiner |
|---|---|---|
| THE HAGUE | 18-06-1984 | GRENTZIUS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82